# EUROPÄISCHE PATENTSCHRIFT

(11) **EP 2 092 211 B1**
(45) Veröffentlichungstag und Bekanntmachung des Hinweises auf die Patenterteilung: **02.06.2010**
(21) Anmeldenummer: 07817784.7
(22) Anmeldetag: 07.11.2007
(51) Int. Cl.: F16F 9/12

(54) **DREHDÄMPFER**
ROTATIONAL DAMPER
AMORTISSEUR ROTATIF

(30) Priorität: 17.11.2006 DE 202006017587 U
(43) Veröffentlichungstag der Anmeldung: 26.08.2009
(73) Patentinhaber: DIETER HÖLZLE TECHNIK-PROJEKTE GmbH, 75392 Deckenpfronn (DE)
(72) Erfinder: WEBER, Wilfried, 72296 Schopfloch (DE); HEIMSCH, Jochen, 70734 Fellbach (DE)
(74) Vertreter: Schön, Thilo
(86) Internationale Anmeldenummer: PCT/DE2007/001996
(87) Internationale Veröffentlichungsnummer: WO 2008/058510

(56) Entgegenhaltungen:
- WO-A-95/10728
- WO-A-96/13674
- DE-A1- 3 844 544
- DE-A1- 4 207 757
- DE-C- 516 627
- US-A- 4 796 733
- US-A- 5 301 775
- US-A1- 2002 043 127

## Beschreibung

### Technischer Hintergrund

Die Erfindung betrifft einen Drehdämpfer mit einem Stator und einem im Stator drehbar gelagerten Rotor mit einem ersten Friktionselement, wobei das Volumen zwischen Stator und Rotor mit einer viskosen Flüssigkeit gefüllt ist.

Je nach geometrischer Gestaltung des Rotors und der Viskosität der Flüssigkeit wirkt bei Beaufschlagung des Rotors durch ein äußeres Drehmoment ein Gegenmoment, das die Rotation des Rotors hemmt und die daran gekoppelte äußere Bewegung verstetigt und verlangsamt.

Für derartige Drehdämpfer gibt es viele Anwendungsbereiche im gesamten technischen Gebiet, überall dort, wo beispielsweise aus Sicherheitsgründen oder Komfortgründen eine ansonsten abrupt ablaufende Bewegung geglättet und verlangsamt werden soll.

### Stand der Technik

Die Vielzahl der Anwendungsbereiche für derartige Drehdämpfer erfordert naturgemäß eine unterschiedliche Auslegung der Dämpfungswirkung je nach gewünschtem Einsatzzweck; dies bedingt in der Regel die Anpassung der einzelnen Bauteile, insbesondere des Rotors und dessen Zusammenwirken mit der viskosen Flüssigkeit.

Ein gattungsgemäßer Drehdämpfer ist aus der DE 42 07 757 bekannt; der Rotor ist als Drehbauteil mit zwei Flügeln ausgestaltet, deren Rotation in der viskosen Flüssigkeit die gewünschte Dämpfung des von außen über ein Zahnrad eingebrachten Drehmomentes bewirkt.

Die DE 10 2004 032 172 A1 zeigt einen Drehdämpfer, bei dem eine Änderung des Dämpfungsverhaltens durch eine Veränderung des Arbeitsraumvolumens mittels einer beweglichen Begrenzungswand erreicht wird. Dieser Drehdämpfer weist ein relativ grosses Bauvolumen auf und scheidet damit für viele Verwendungsbereiche aus. Er erfordert ausserdem Metallbauteile, was einer einfachen und kostengünstigen Fertigung im Wege steht, die in diesen Bereichen besonders wesentlich ist.

Die DE 38 44 544 A1 zeigt einen Drehflügel-Stoßdämpfer, bei dem die Dämpfungswirkung durch Bemessung eines Spaltes, durch den die viskose Flüssigkeit von einer ersten Kammer in einer zweite Kammer bewegt wird, einstellbar ist, die Dämpfung eines Stoßes, d.h. einer zeitlich begrenzten impulsartigen Bewegung kann dadurch in gewissem Umfang eingestellt werden, wobei der Drehwinkel auf Werte unter 360 Grad begrenzt bleiben muss. Diese Vorrichtung ist daher für kontinuierlich zu dämpfende Bewegungsabläufe nicht verwendbar.

Die DE 516 627 zeigt ein Dämpfungselement, das auf einem anderen Dämpfungsprinzip beruht, nämlich durch Verschiebung von zwei auf einer gemeinsamen Welle axial bewegbaren Kolben, die über die Welle gegeneinander verdreht werden, wobei das "Widerstandsmedium" entweder Federn oder auch eine Viskoseflüssigkeit sein kann. Diese Vorrichtung dient vorzugsweise als Schwingungsdämpfer in Kraftfahrzeugen und ist ebenfalls für kontinuierlich zu dämpfende Bewegungsabläufe nicht geeignet.

Die WO 95/10728 zeigt ein Friktionselement, dessen Rotor relativ zum Stator mittels einer Einstellschraube axial verstellbar ist, die Dämpfungswirkung entsteht auch hier durch die Rotation von Stator relativ zum Rotor. Dieses Dämpfungselement ist vorzugsweise zum Einsatz im TV- oder Videobereich zum Schutz gegen Verwacklungen oder Verzerrungen vorgesehen (entspricht DE 4 497 719 C2).

Die JP 09060678 A zeigt ein vielseitig einsetzbares Dämpfungsglied, bei dem mittels einer Stellwelle Stator und Rotor in einem Medium relativ zueinander verschiebbar sind und so die Dämpfungswirkung eingestellt werden soll.

Die DE 100 34 393 C2 benutzt ein ähnliches Prinzip wie die oben genannte DE 516 627, nämlich die Erzeugung einer Reibungs- und damit Dämpfungswirkung mittels Verschiebung eines Kolbens, diese Vorrichtung ist als Sicherheitsgurtaufroller konzipiert.

Die FR 714 099 zeigt eine komplex aufgebaute Dämpfungsvorrichtung, die ebenfalls auf der axialen Verschiebung eines kolbenähnlichen Bauteils beruht, die auf vielfältige Weise einstellbar ist, und dient als Stoßdämpfer für Kraftfahrzeuge.
Mit dieser Vorrichtung ist nur ein begrenzter Drehwinkel abdeckbar, sie ist ähnlich aufgebaut wie die oben erwähnte DE 516 627; eine Kugel dient als Dämpfungsventil zur Herstellung einer Dämpfung nur in einer Richtung.

Die EP 1 245 465 A1 zeigt ebenfalls einen Gurtaufroller, der auf dem gleichen Prinzip beruht wie die oben erwähnte DE 100 34 393 C2.

Die JP 05288234 A schließlich zeigt wiederum eine Lösung, bei der eine Dämpfung durch Initiierung einer Vor- und Rückbewegung eines Kolbens bewirkt wird, der in einem Innengewinde eines Gehäuses bei Beaufschlagung mit einer äußeren Kraft verdreht wird.

### Darstellung der Erfindung

Die Aufgabe der Erfindung besteht darin, einen Drehdämpfer nach Art der erstgenannten DE 42 07 757 derart weiterzubilden, dass mit einfachen Mitteln eine kontinuierliche Einstellung des Dämpfungsmomentes über einen weiten Bereich erfolgen kann, um die Anforderungen an die Drehdämpfung in verschiedenen Anwendungsbereichen mit nur einem Baumuster erfüllen zu können.

Diese Aufgabe wird gemäß der Erfindung dadurch gelöst, dass der Rotor ein zweites Friktionselement beinhaltet, das koaxial zum ersten Friktionselement mit diesem drehgekoppelt gelagert und relativ zu diesem axial verschiebbar ist.

Der Grundgedanke der Erfindung besteht somit darin, ein Friktionselement, wie es aus dem Stand der Technik bekannt ist, zweiteilig aufzubauen und durch die axiale Verschiebbarkeit der beiden Friktionselemente die in der viskosen Flüssigkeit wirksame Gesamtoberfläche des Friktionselementes und damit den Reibungswiderstand und die Dämpfungscharakteristik des Drehdämpfers zu verändern.

Vorzugsweise weist das zweite Friktionselement hierzu mehrere Segmente auf, die in das erste Friktionselement eintauchen und mittels eines Stellelements verschiebbar sind. Diese Segmente bewirken die Drehkopplung der beiden Friktionselemente.

Zur relativen axialen Verschiebung der beiden Friktionselemente und damit zur Einstellung der Dämpfungscharakteristik dient ein von außen betätigbares Stellelement, vorzugsweise eine Stellwelle, die über eine Gewindeverbindung an einem der Friktionselemente angreift und dieses relativ zum jeweils anderen Friktionselement verschiebt, wodurch die Widerstandsfläche des Friktionselementes in der viskosen Flüssigkeit einstellbar wird.

Weitere Ausgestaltungen der Erfindung sind den Unteransprüchen zu entnehmen.

### Kurze Beschreibung der Zeichnungen

Mehrere Ausführungsbeispiele der Erfindung werden anhand von Zeichnungen näher erläutert. Es zeigen:
- Figur 1:: Eine erste perspektivische Ansicht eines ersten Ausführungsbeispiels eines Drehdämpfers mit einem Zahnstangenantrieb,
- Figur 2:: eine zweite perspektivische Ansicht des Drehdämpfers nach Figur 1,
- Figur 3:: eine Seitenansicht des Drehdämpfers gemäß Figur 1 und 2,
- Figur 4:: eine erste Schnittdarstellung des Drehdämpfers gemäß Figur 1 und 2 in der Ebene C-C von Figur 3 in einer ersten Betriebsposition,
- Figur 5:: eine perspektivische Darstellung des Drehdämpfers gemäß Figur 4 ohne Statorabdeckung,
- Figur 6:: eine zweite Schnittdarstellung des Drehdämpfers gemäß Figur 1 und 2 in der Ebene C-C von Figur 3 in einer zweiten Betriebsposition,
- Figur 7:: eine perspektivische Darstellung des Drehdämpfers gemäß Figur 6 ohne Statorabdeckung,
- Figur 8:: eine Schnittdarstellung eines zweiten Ausführungsbeispiels eines Drehdämpfers,
- Figur 9:: eine Schnittdarstellung eines dritten Ausführungsbeispiels eines Drehdämpfers,
- Figur 10:: eine Schnittdarstellung eines vierten Ausführungsbeispiels eines Drehdämpfers,
- Figur 11:: eine perspektivische Darstellung eines fünften Ausführungsbeispiels eines Drehdämpfers in zwei Betriebspositionen,
- Figur 12:: eine perspektivische Darstellung eines sechsten Ausführungsbeispiels eines Drehdämpfers in zwei Betriebspositionen,
- Figur 13:: eine perspektivische Darstellung eines Drehdämpfers nach Figur 11 oder 12 mit einem Einstellwerkzeug, und
- Figur 14:: eine Darstellung der Dämpfungscharakteristik eines Drehdämpfers nach den Ausführungsbeispielen.

### Beschreibung der Ausführungsbeispiele

Die im folgenden beschriebenen Ausführungsbeispiele zeigen einen Drehdämpfer mit einem zweiteilig aufgebauten Stator und einen sich im Stator drehenden Rotor 3, bestehend aus zwei axial zueinander verschiebbaren Friktionselementen 31,32, deren relative Positionierung und damit die Dämpfung des Drehdämpfers mittels eines von außen zugänglichem Stellelements 4 einstellbar ist.

Der Stator besteht bei allen Ausführungsbeispielen aus zwei Statorteilen 1 und 2, wobei der erste Statorteil 1 mittels des flügelartig dargestellten Flansches mit einem externen Bauteil, beispielsweise einer Gehäusewandung, verbunden ist und im wesentlichen topfähnlich ausgebildet ist. Der zweite Statorteil 2 ist auf den ersten Statorteil 1 deckelartig aufgesetzt.

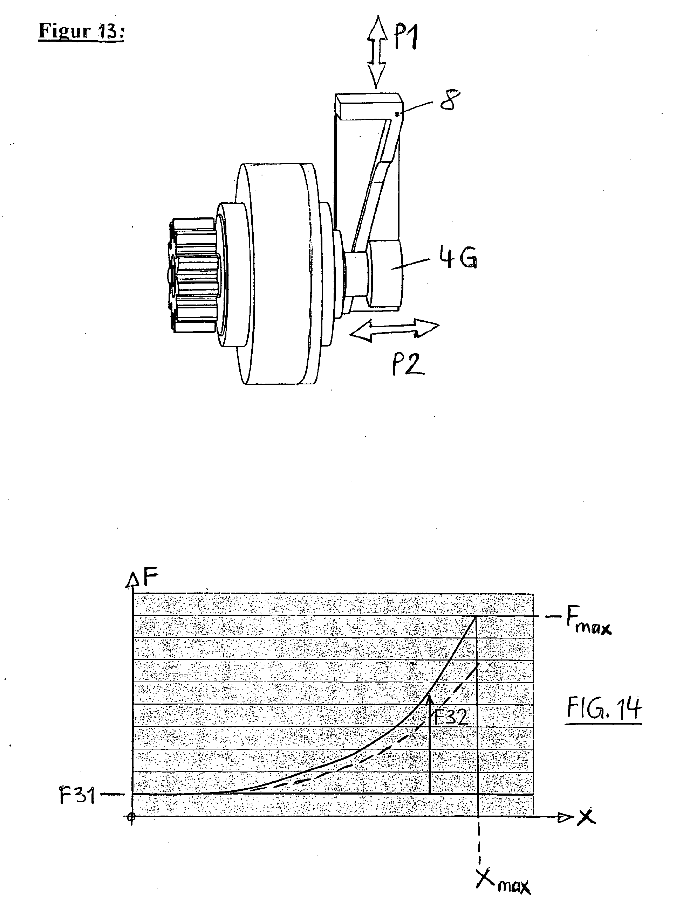

Innerhalb des ersten Statorteils 1 ist ein erstes Friktionselement 31 drehbar gelagert, dessen Außenquerschnitt etwa dem Innenquerschnitt des ersten Statorteils 1 entspricht. Der Innenraum des Stators 1,2 ist mit einer viskosen Flüssigkeit in bekannter Art und Weise ausgefüllt, so dass sich bei Drehung des ersten Friktionselementes 31 innerhalb des ersten Statorteils 1 eine Dämpfung ergibt, die von der Anpassung und Formgebung zwischen erstem Friktionselement 31 und Statorteil 1 bestimmt ist. Dies kann als eine Art "Basisdämpfung" angesehen werden, die in Figur 14 mit F31 bezeichnet ist. Insoweit entspricht der Aufbau des Drehdämpfers weitgehend dem Stand der Technik.

Erfindungsgemäß ist ein zweites Friktionselement innerhalb des Stators koaxial zum ersten Friktionselement 31 drehbar gelagert, das über Segmente 5 verfügt, die in weitgehend komplementäre Aussparungen im ersten Friktionselement 31 bis zu einer vorgebbaren Tiefe X einführbar sind, zu diesem Zweck ist das zweite Friktionselement 32 axial verschiebbar zum ersten Friktionselement 31 gelagert. Mit der Wahl der Tiefe X, mit der die Segmente 5 des zweiten Friktionselementes 32 in die weitgehend komplementär gestalteten Ausnehmungen des ersten Friktionselementes eintauchen können, lässt sich die Dämpfung F (Figur 14) um einen Dämpfungswert F32 einstellen. Dies bedeutet, dass eine Dämpfungscharakteristik des Drehdämpfers erreichbar ist, die von einer minimalen Dämpfung (F31 bei X = 0) bis zu einer maximalen Dämpfung (F31 + F32 bei X = Xₘₐₓ) variierbar ist und somit an die jeweilige Verwendung anpassbar ist.

Zur Einstellung der Tiefe X sind die beiden Friktionselemente 31 und 32 mittels eines Stellelements 4, das von außen zugänglich ist, axial verschiebbar, so dass durch Verwendung eines geeigneten Einstellwerkzeuges für das Stellelement 4 auf einfache Art und Weise die Tiefe X und damit die Gesamtdämpfung F = F31 + F32 eingestellt werden kann.

Zur axialen Verschiebung der beiden Friktionselemente 31 und 32 im Stator dient bei allen Ausführungsbeispielen eine Gewindeverbindung zwischen der Stellwelle und einem entsprechenden Gewinde des ersten oder zweiten Friktionselementes.

Bei den dargestellten Ausführungsbeispielen ist der aus dem Stator ragende Abschnitt des ersten Friktionselementes 31 fest mit einem Zahnrad 6 verbunden, das mit einer Zahnstange 7 kämmt. Bei diesem speziellen Verwendungszweck dient der oben beschriebene Drehdämpfer somit zur Dämpfung einer Linearbewegung der Zahnstange 7 bzw. eines mit dieser Zahnstange 7 verbundenen (nicht dargestellten) Bauteils. Selbstverständlich lässt sich der erfindungsgemäße Drehdämpfer auch ohne diese Bauteile einsetzen, wenn ein externes Drehmoment auf das erste Friktionselement 31 außerhalb des Stators aufgebracht wird.

Die Einstellung der Tiefe X über das Stellelement 4 mittels eines Einstellwerkzeuges kann hierbei grundsätzlich von einer der beiden Stirnseiten (oder auch beiden) des Stellelements 4 durch Eingriff eines Einstellwerkzeugs wie beispielsweise eines Schraubenziehers, eines Imbusschlüssels oder eines speziellen Werkzeuges erfolgen.

Die Ausführungsbeispiele unterscheiden sich in der konstruktiven Gestaltung dieser Bauteile, die an den gewünschten Einsatzbereich des Drehdämpfers angepasst werden kann:

### Erstes Ausführungsbeispiel

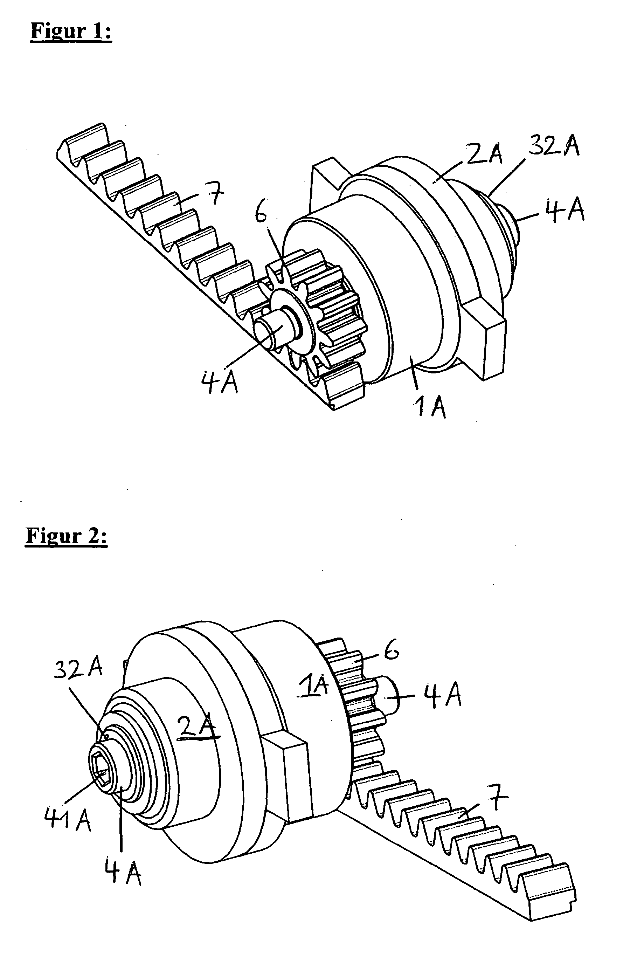

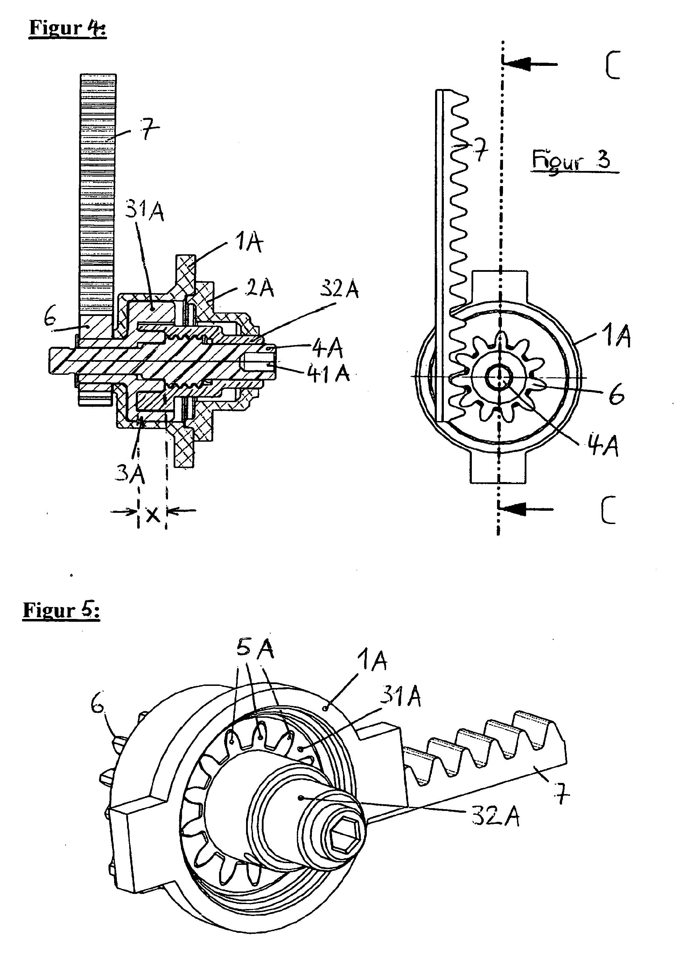

Beim ersten Ausführungsbeispiel (Figur 1 bis 7) ist das Stellelement 4 eine Stellwelle 4A, die mit ihrem einen Ende im ersten Friktionselement 31 A gelagert ist, und auf ihrem anderen Ende verschiebbar das zweite Friktionselement 32A trägt, das seinerseits in einer entsprechenden Öffnung des zweiten Statorteils 2A gelagert ist. Durch ein Außengewinde der Stellwelle 4A und ein korrespondierendes Innengewinde des zweiten Friktionselementes 32A sind diese beiden Bauteile radial fest miteinander verbunden und drehen sich gemeinsam im Stator.

An der am zweiten Statorteil 2A herausragenden Stirnseite ist die Stellwelle 4A mit einer Einstellöffnung 41 A versehen, in die ein Imbusschlüssel eingeführt werden kann, mit dem die relative axiale Positionierung von Stellwelle 4A und zweitem Friktionselement 32A verändert werden kann, mit der Wirkung, dass die insgesamt zahnradähnlich ausgebildeten Segmente 5A mehr oder weniger tief in die entsprechenden Ausnehmungen des ersten Friktionselementes 31 A eintauchen.

In Figur 1 bis 5 ist eine erste Betriebsposition des Drehdämpfers mit minimaler Drehdämpfung dargestellt. In dieser Betriebsposition nimmt das zweite Friktionselement 32A seine tiefste Position im ersten Friktionselement 31A ein, die gesamte Drehdämpfung entspricht somit dem in Figur 14 dargestellten Wert F = F31 , dessen Wert von der Dämpfung des ersten Friktionsteils 31 A im Rotorteil 1 A bestimmt wird.

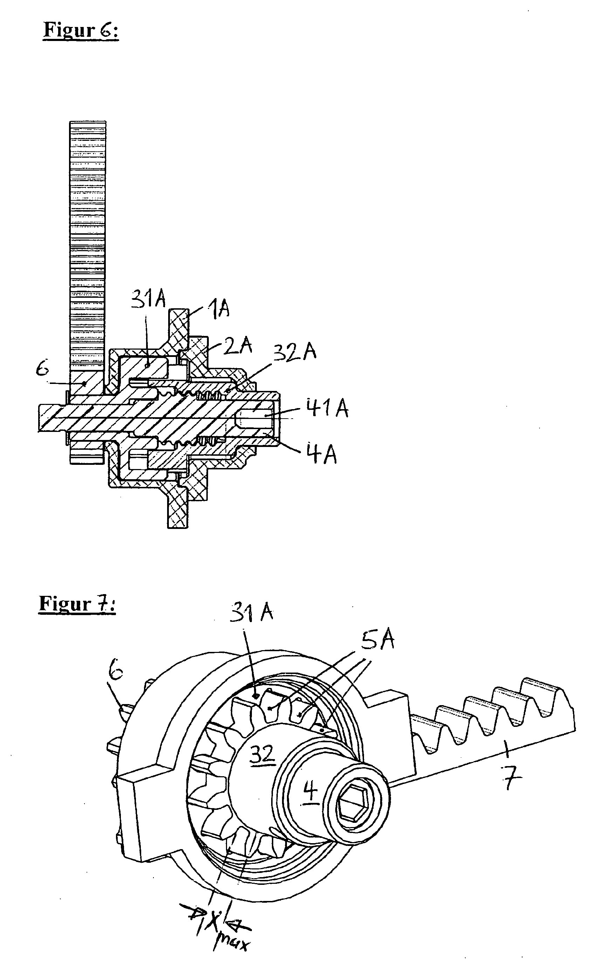

Bei der in Figur 6 und 7 dargestellten zweiten Betriebsposition des Drehdämpfers gemäß dem ersten Ausführungsbeispiel ist das zweite Friktionselement 32A durch Verdrehung der Stellwelle 4A in eine zweite Betriebsposition gebracht worden, die einer Endposition entspricht, in der eine umlaufende Außenschulter des zweiten Friktionselementes 32A an einer Innenschulter des zweiten Statorteils 2A zum Anschlag kommt. In dieser Endposition sind die Segmente 5A aus "ihren" Ausformungen im ersten Friktionselement 31 A um ihre maximale Tiefe Xₘₐₓ herausgezogen, woraus sich die größtmögliche Drehdämpfung Fₘₐₓ = F31 + F32ₘₐₓ ergibt.

### Zweites Ausführungsbeispiel

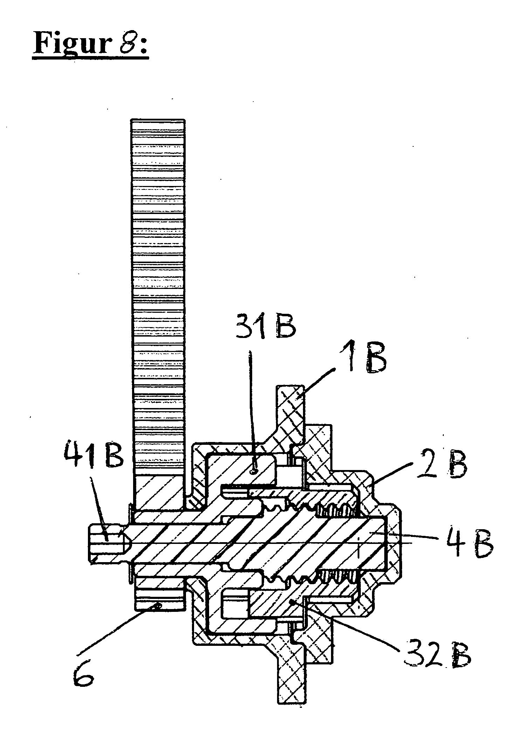

Beim zweiten Ausführungsbeispiel (Figur 8) ist der zweite Statorteil 2B als geschlossene Kappe ausgebildet, so dass die Einstellöffnung 41 B auf der anderen Seite des Drehdämpfers liegt, die das Zahnrad 6 trägt. Die Einstellung der Axialposition zwischen erstem Friktionselement 31 B und zweitem Friktionselement 32 B mittels der Stellwelle 4B erfolgt daher von dieser Seite her, ansonsten entspricht die Funktionsweise derjenigen beim beschriebenen ersten Ausführungsbeispiel; in Figur 8 ist (entsprechend Figur 6 und 7 beim ersten Ausführungsbeispiel) diejenige Betriebsposition dargestellt, in der die maximale Drehdämpfung Fₘₐₓ = F31 + F32ₘₐₓ eingestellt ist, hier bildet die innere Ringschulter des zweiten Statorbauteils 2B einen Anschlag für die Stirnseite des zweiten Friktionselementes 32B.

### Drittes Ausführungsbeispiel

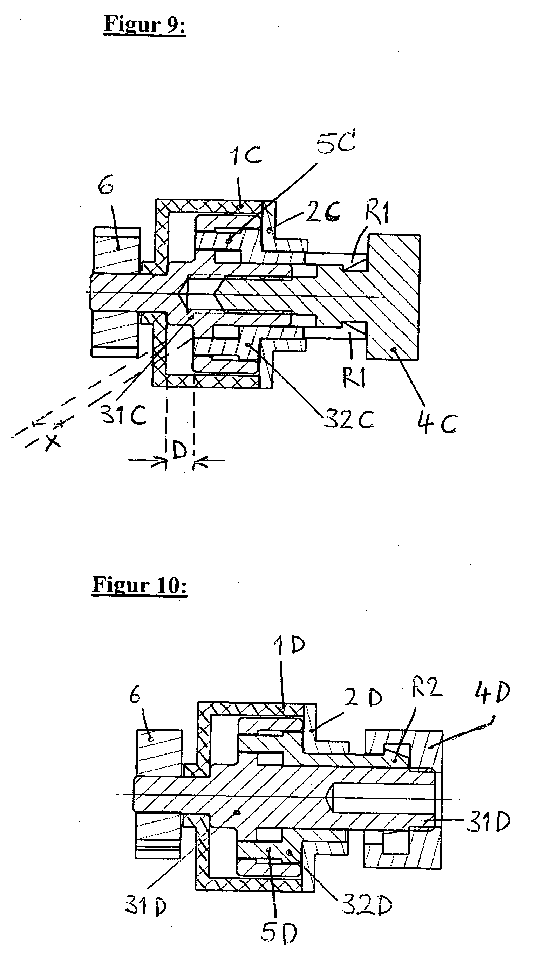

Beim dritten Ausführungsbeispiel (Figur 9) ist der zweite Statorteil 2C wiederum offen und nimmt den rückwärtigen Teil des zweiten Friktionselementes 32C auf.

Bei dieser Variante ist die Stellwelle 4C über ein Außengewinde mit einem korrespondierenden Innengewinde des ersten Friktionselementes 31C verbunden, und über eine Schnappverbindung mittels Rasthaken R1 axial mit dem zweiten Friktionselement 32C gekoppelt.

Das erste Friktionselement 31C ist mit Durchbrechungen für die Segmente 5C des zweiten Friktionselements 32C versehen und mittels einer umlaufenden Schulter einerseits und dem Zahnrad 6 andererseits axial unverschiebbar im Stator in einem Abstand D zur Stirnwandung des ersten Statorteils 1C gehalten, so dass eine Verdrehung der Stellwelle 4C zu der Relatiwerschiebung zwischen den beiden Friktionselementen 31C,32C führt, als deren Folge die Eintauchtiefe X der Segmente 5C und damit die Dämpfungscharakteristik einstellbar ist. Bei der im Ausführungsbeispiel dargestellten Betriebsposition ist D=X.

Hier ist die Stellwelle 4C unmittelbar von Hand betätigbar ausgestaltbar, so dass keine Einstellöffnung vorgesehen ist.

### Viertes Ausführungsbeispiel (Figur 10)

Beim vierten Ausführungsbeispiel erstreckt sich das erste Friktionselement 31 D ebenfalls durch die Drehöffnung des Statorteils 2D; das Stellelement 4 nimmt die Form einer Stellmutter 4D ein, die einerseits über Rastnasen R2 mit dem zweiten Friktionselement 32D axial fest gekoppelt ist, andererseits über ein Innengewinde mit einem Außengewinde des ersten Friktionselements 31D verbunden ist, so dass eine Drehung der Stellmutter 4D zu einem Herausziehen bzw. Einschieben des zweiten Friktionselementes 32D mit seinen Segmenten 5D durch das erste Friktionselement 31D in das Volumen zwischen erstem Statorteil 1D und erstem Friktionselement 31D bewirkt. In der dargestellten Position ist somit die minimale Drehdämpfung eingestellt.

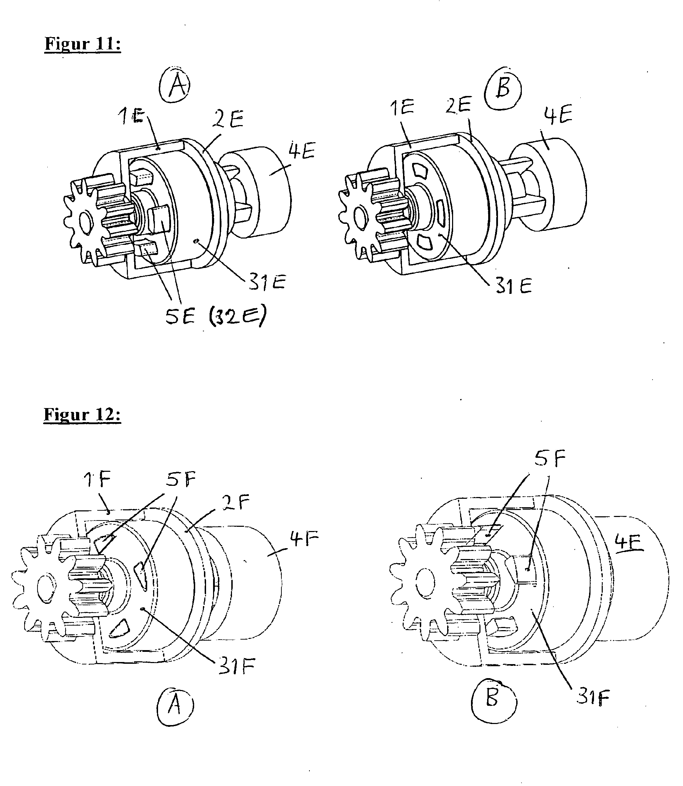

### Fünftes Ausführungsbeispiel (Figur 11)

Bei diesem Ausführungsbeispiel ist eine Variante der Segmente 5E dargestellt, die in der ersten Betriebsposition A die maximale Drehdämpfung, bei ihrer "eingezogenen" Position B die minimale Drehdämpfung bewirken. Die Stellwelle 4E ist hierbei derart den beiden Friktionselementen 31 E,32E zugeordnet, dass ihre Verschiebung oder Verdrehung die Verschiebung der Segmente 31 E verursacht.

### Sechstes Ausführungsbeispiel

Das sechste Ausführungsbeispiel (Figur 12) entspricht in seinem grundsätzlichen Aufbau dem fünften Ausführungsbeispiel der Figur 11, die Segmente 5F sind jedoch derart hinsichtlich ihres Querschnitts gewählt, dass ihr Strömungswiderstand in der viskosen Flüssigkeit nach Drehrichtung variiert, was in Figur 14 durch eine zweite (gestrichelte) Kennlinie dargestellt ist:
Bei Drehung im Uhrzeigersinn ist der Strömungswiderstand geringer (durch die angedeutete Stromlinienform der Segmente 5F, gestrichelte Kennlinie in Figur 14) als bei Drehung entgegen dem Uhrzeigersinn (durchgezogene Kennlinie in Figur 14).
Ausgehend von der Gestaltung des fünften und sechsten Ausführungsbeispiels der Figuren 11 und 12 zeigt Figur 13 schließlich ein spezielles Werkzeug 8, das durch Umsetzung über eine schiefe Ebene bei Bewegung in Richtung des Pfeils P1 eine entsprechende Axialverschiebung der Stellwelle 4G in Richtung des Pfeils P2 und damit einer Einstellung der Dämpfungscharakteristik gestattet.

### Bezugszeichen

- Stator: 1,1A...1F 2, 2A...2F
- erstes Friktionselement: 31,31A...31F
- zweites Friktionselement: 32,32A...32F
- Stellelement: 4, 4A...4G
- Stellöffnung: 41,41A,41B
- Segmente: 5, 5A...5F
- Zahnrad: 6
- Zahnstange: 7
- Werkzeug: 8

## Patentansprüche

1. Drehdämpfer mit einem Stator (1,2), und einem im Stator drehbar gelagerten Rotor mit einem ersten Friktionselement (31), wobei das Volumen zwischen Stator (1A,2A) und Rotor mit einer viskosen Flüssigkeit gefüllt ist,
**dadurch gekennzeichnet, dass** der Rotor ein zweites Friktionselement (32) beinhaltet, das koaxial zum ersten Friktionselement (31) mit diesem drehgekoppelt gelagert und relativ zu diesem axial verschiebbar ist.

2. Drehdämpfer nach Anspruch 1, **dadurch gekennzeichnet, dass** ein von außen betätigbares Stellelement (4) mit dem ersten oder dem zweiten Friktionselement (31,32) zu deren relativer axialer Verschiebung verbunden ist.

3. Drehdämpfer nach Anspruch 2, **dadurch gekennzeichnet, dass** das Stellelement eine Stellwelle (4A...4C) ist, die an mindestens einem ihrer Enden so ausgestaltet ist, dass sie eine Eingriffsöffnung (41A,41B) zum kraftschlüssigen Eingriff eines Einstellwerkzeugs aufweist, mit dem sie verdrehbar oder axial verschiebbar ist.

4. Drehdämpfer nach Anspruch 3, **dadurch gekennzeichnet, dass** die Stellwelle (4A) koaxial durch das erste Friktionselement (31A) und das zweite Friktionselement (32A) geführt ist.

5. Drehdämpfer nach Anspruch 3, **dadurch gekennzeichnet, dass** die Stellwelle (4C) über ein Außengewinde in ein Innengewinde des ersten Friktionselements (31 C) eingreift.

6. Drehdämpfer nach Anspruch 3, **dadurch gekennzeichnet, dass** die Stellwelle (4A,4B) über ein Innengewinde in ein Außengewinde des zweiten Friktionselements (32A,32B) eingreift.

7. Drehdämpfer nach Anspruch 2, **dadurch gekennzeichnet, dass** das Stellelement eine Stellmutter (4D) ist, deren Innengewinde in ein Außengewinde des ersten Friktionselements (31 D) eingreift und das zweite Friktionselement (32D) axial beaufschlagt.

8. Drehdämpfer nach Anspruch 3, **dadurch gekennzeichnet, dass** die Stellwelle (4G) eine Umfangschulter aufweist, an der ein keilförmiges Einstellwerkzeug (8) angreifen kann.

9. Drehdämpfer nach Anspruch 2, **dadurch gekennzeichnet, dass** das zweite Friktionselement (32) mindestens ein Segment (5) aufweist, das in einer mittels des Stellelements (4) einstellbaren Tiefe (X) in das Volumen mit der viskosen Flüssigkeit ragt, und das auch die Drehkopplung der beiden Friktionselemente (31,32) bewirkt.

10. Drehdämpfer nach Anspruch 9, **dadurch gekennzeichnet, dass** die Segmente (5) eine zahnradähnliche Anordnung bilden.

11. Drehdämpfer nach Anspruch 9, **dadurch gekennzeichnet, dass** der Strömungswiderstand des mindestens einen Segments (5F) abhängig von der Drehrichtung des Rotors ist.

12. Drehdämpfer nach Anspruch 1 und 9, **dadurch gekennzeichnet, dass** das erste Friktionselement (31) ein Zylinderkörper ist, dessen Stirnseite komplementär zu dem Querschnitt des mindestens eines Segments (5) mindestens bis zur Tiefe (X) eingeschnitten ist, wobei Spiel zum Durchtritt der viskosen Flüssigkeit bei der Axialverschiebung der beiden Friktionselemente (31,32) verbleibt.

13. Drehdämpfer nach Anspruch 2, **dadurch gekennzeichnet, dass** der Mantel des ersten Friktionselements (31) an der Innenseite des Stators gleitet.

14. Drehdämpfer nach Anspruch 1, **dadurch gekennzeichnet, dass** der Rotor ein Zahnrad (6) aufweist, das mit einer Zahnstange (7) kämmt.

15. Drehdämpfer nach Anspruch 3, **dadurch gekennzeichnet, dass** der Stator (2B) die Stellwelle (4B) deckelähnlich überdeckt, und dass das gegenüberliegende Ende der Stellwelle (4B) eine Eingriffsöffnung (41 B) für ein Einstellwerkzeug aufweist.

## Claims

1. Rotational damper having a stator (1, 2) and a rotor that is rotatably mounted in the stator, said rotor having a first friction element (31),
wherein the volume between stator (1A, 2A) and rotor is filled with a viscous fluid, **characterized in that** the rotor includes a second friction element (32) that is mounted coaxially in relation to the first friction element (31) so as to be rotationally coupled thereto and is axially displaceable relative to said first friction element.

2. Rotational damper according to Claim 1, **characterized in that** an adjusting element (4) that can be actuated from outside is connected to the first or the second friction element (31, 32) for the relative axial displacement of the same.

3. Rotational damper according to Claim 2, **characterized in that** the adjusting element is an adjusting shaft (4A...4C), which is designed at least at one of its ends such that it has an engagement opening (41A, 41 B) for the frictional engagement of an adjusting tool, by way of which it can be turned or axially displaced.

4. Rotational damper according to Claim 3, **characterized in that** the adjusting shaft (4A) is guided coaxially through the first friction element (31 A) and the second friction element (32A).

5. Rotational damper according to Claim 3, **characterized in that** the adjusting shaft (4C) engages via an external thread in an internal thread of the first friction element (31 C).

6. Rotational damper according to Claim 3, **characterized in that** the adjusting shaft (4A, 4B) engages via an internal thread in an external thread of the second friction element (32A, 32B).

7. Rotational damper according to Claim 2, **characterized in that** the adjusting element is an adjusting nut (4D), the internal thread of which engages in an external thread of the first friction element (31 D) and acts upon the second friction element (32D) in an axial manner.

8. Rotational damper according to Claim 3, **characterized in that** the adjusting shaft (4G) has a peripheral shoulder, on which a wedge-shaped adjusting tool (8) can engage.

9. Rotational damper according to Claim 2, **characterized in that** the second friction element (32) has at least one segment (5), which extends at a depth (X), adjustable by means of the adjusting element (4), into the volume with the viscous fluid, and which also brings about the rotational coupling of the two friction elements (31, 32).

10. Rotational damper according to Claim 9, **characterized in that** the segments (5) form a toothed-wheel-like arrangement.

11. Rotational damper according to Claim 9, **characterized in that** the flow resistance of the at least one segment (5F) is dependent on the direction of rotation of the rotor.

12. Rotational damper according to Claim 1 and 9, **characterized in that** the first friction element (31) is a cylindrical body, the end face of which is cut into at least up to the depth (X) so as to be complementary to the cross section of the at least one segment (5), wherein a clearance remains for the passage of the viscous fluid during the axial displacement of the two friction elements (31, 32).

13. Rotational damper according to Claim 2, **characterized in that** the outer surface of the first friction element (31) slides on the inside of the stator.

14. Rotational damper according to Claim 1, **characterized in that** the rotor has a toothed wheel (6), which meshes with a toothed rack (7).

15. Rotational damper according to Claim 3, **characterized in that** the stator (2B) covers the adjusting shaft (4B) in a cover-like manner, and **in that** the oppositely situated end of the adjusting shaft (4B) has an engagement opening (41 B) for an adjusting tool.

## Revendications

1. Amortisseur rotatif comprenant un stator (1, 2) et, monté rotatif dans le stator, un rotor comprenant un premier élément de friction (31), le volume entre le stator (1A, 2A) et le rotor étant rempli par un fluide visqueux,
**caractérisé en ce que** le rotor contient un deuxième élément de friction (32) qui est monté couplé en rotation avec le premier élément de friction (31) coaxialement par rapport à celui-ci, et déplaçable axialement relativement à celui-ci.

2. Amortisseur rotatif selon la revendication 1, **caractérisé en ce qu'**un élément de positionnement (4) actionnable depuis l'extérieur est relié avec le premier ou le deuxième élément de friction (31, 31) pour leur déplacement relatif axial.

3. Amortisseur rotatif selon la revendication 2, **caractérisé en ce que** l'élément de positionnement est un arbre de positionnement (4A ... 4C) qui est arrangé à au moins l'une de ses extrémités de façon qu'il présente une ouverture d'engagement (41A, 41B) pour l'engagement à force d'un outil de réglage, avec lequel il peut être mis en rotation ou déplacé axialement.

4. Amortisseur rotatif selon la revendication 3, **caractérisé en ce que** l'arbre de positionnement (4A) est guidé coaxialement à travers le premier élément de friction (31) et le deuxième élément de friction (31A).

5. Amortisseur rotatif selon la revendication 3, **caractérisé en ce que** l'arbre de positionnement (4C) s'engage par l'intermédiaire d'un filetage extérieur dans un filetage intérieur du premier élément de friction (31C).

6. Amortisseur rotatif selon la revendication 3, **caractérisé en ce que** l'arbre de positionnement (4A, 4B) s'engage par l'intermédiaire d'un filetage intérieur dans un filetage extérieur du deuxième élément de friction (32A, 32B).

7. Amortisseur rotatif selon la revendication 2, **caractérisé en ce que** l'élément de positionnement est un écrou de positionnement (4D) dont le filetage intérieur s'engage dans un filetage extérieur du premier élément de friction (31D) et sollicite axialement le deuxième élément de friction (32D).

8. Amortisseur rotatif selon la revendication 3, **caractérisé en ce que** l'arbre de positionnement (4G) présente un épaulement périphérique avec lequel un outil de réglage (8) en forme de coin peut venir en prise.

9. Amortisseur rotatif selon la revendication 2, **caractérisé en ce que** le deuxième élément de friction (32) présente au moins un segment (5) qui plonge d'une profondeur (X), réglable au moyen de l'élément de réglage (4), dans le volume comprenant le fluide visqueux, et qui assure aussi le couplage en rotation des deux éléments de friction (31, 32).

10. Amortisseur rotatif selon la revendication 9, **caractérisé en ce que** les segments (5) forment un agencement semblable à une roue dentée.

11. Amortisseur rotatif selon la revendication 9, **caractérisé en ce que** la résistance à l'écoulement de l'au moins un segment (5F) dépend de la direction de rotation du rotor.

12. Amortisseur rotatif selon les revendications 1 et 9, **caractérisé en ce que** le premier élément de friction (31) est un corps cylindrique dont la face frontale est taillée complémentaire de la section transversale de l'au moins un segment (5) au moins jusqu'à la profondeur (X), du jeu subsistant pour le passage du fluide visqueux lors du déplacement axial des deux éléments de friction (31, 32).

13. Amortisseur rotatif selon la revendication 2, **caractérisé en ce que** la paroi latérale du premier élément de friction (31) glisse sur la face intérieure du stator.

14. Amortisseur rotatif selon la revendication 1, **caractérisé en ce que** le rotor présente une roue dentée (6) qui engrène avec une crémaillère (7).

15. Amortisseur rotatif selon la revendication 3, **caractérisé en ce que** le stator (2B) recouvre l'arbre de positionnement (4B) comme un couvercle, et **en ce que** l'extrémité opposée de l'arbre de positionnement (4B) présente une ouverture d'engagement (41B) pour un outil de réglage.
